(19) Europäisches Patentamt / European Patent Office / Office européen des brevets

(11) **EP 4 152 277 B1**

(12) **EUROPEAN PATENT SPECIFICATION**

(45) Date of publication and mention
of the grant of the patent:
**27.03.2024 Bulletin 2024/13**

(21) Application number: **22159720.6**

(22) Date of filing: **02.03.2022**

(51) International Patent Classification (IPC):
***G06V 20/80*** *(2022.01)* ***G06V 10/75*** *(2022.01)*

(52) Cooperative Patent Classification (CPC):
**G06V 20/80; G06V 10/75;** G06V 2201/06

(54) **COLLATION DEVICE**

KOLLATIONSVORRICHTUNG

DISPOSITIF DE COLLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2021 JP 2021151906**

(43) Date of publication of application:
**22.03.2023 Bulletin 2023/12**

(73) Proprietor: **FUJIFILM Business Innovation Corp.
Minato-ku
Tokyo (JP)**

(72) Inventors:
• **OSHIMA, Minoru**
 **Yokohama-shi (JP)**
• **KITAGAWA, Nobuhiro**
 **Yokohama-shi (JP)**

(74) Representative: **Becker, Eberhard
Becker Kurig & Partner
Patentanwälte mbB
Bavariastraße 7
80336 München (DE)**

(56) References cited:
**EP-A2- 2 738 516**

**Description**

BACKGROUND OF THE INVENTION

(i) Field of the Invention

The present invention relates to a collation device.

(ii) Description of Related Art

JP2018-026147A describes an object management device that, in a case of performing individual management based on a microscopic pattern on an object surface, observes a microscopic pattern from an identical image area including a posture, at the time of registration and at the time of collation. Specifically, JP2018-026147A describes the object management device that manages an object based on a microscopic pattern on a surface of an object included in an image obtained by imaging the surface of the object. The object management device has a first position correction unit that performs registration of captured images based on a microscopic pattern commonly appearing on a plurality of objects. The object management device has a second position correction unit that performs registration of the captured images based on a non-microscopic pattern commonly appearing on a plurality of objects and having a size greater than the microscopic pattern before the registration by the first position correction unit.

JP2017-058306A describes an identification device including an imaging unit for registration that images two facing side surfaces of a registration target substrate from a direction perpendicular to a transport direction, and a substrate identification unit that extracts a feature quantity from image data of the registration target substrate captured by the imaging unit for registration, stores the extracted feature quantity of the registration target substrate in association with substrate information, and identifies a collation target substrate by collating the feature quantity extracted from image data of a collation target substrate with the stored feature quantity of the registration target substrate.

JP2017-183390A describes an identification device including an imaging unit that images at least three places including a front side surface and a rear side surface of a target substrate with a plurality of cameras imaging a side surface of the target substrate being transported in a manufacturing line from any one of the front or the rear with respect to a transport direction, and a substrate identification unit that extracts a feature quantity from image data of the target substrate captured by the imaging unit, registers the target substrate while associating the extracted feature quantity with substrate information of the target substrate, and collates the feature quantity extracted from the image data of the target substrate with the registered feature quantity to identify the target substrate.

EP 2 738 516 A2 discloses a method and apparatus for projecting design information on a workpiece using a laser beam and performing comparative determination between the design information and a machining result on the workpiece, and a machining method capable of machining after determining whether or not a tool used in machining is a desired tool.

SUMMARY OF THE INVENTION

In a case of imaging a random pattern depending on a microscopic pattern of an object and collating a captured image with a registration image registered by imaging an identical position in advance to uniquely identify the object, in a case where the object has an elliptic cylindrical shape (including a columnar shape) and a random pattern depending on irregularity on the side surface is taken as a registration image, a reference sign or a reference mark for specifying a position of the registration image on the side surface may be hardly provided. In this case, the position of the registration image cannot be specified. For this reason, imaging for one circumference of the side surface of the elliptic cylindrical shape is forced to be performed.

An object of the invention is to provide a technique for, in a case of imaging a side surface having an elliptic cylindrical shape with no reference sign or reference mark for specifying a position of a registration image and collating a captured image with the registration image, collating the captured image with the registration image to uniquely identify an object without imaging the side surface having the elliptic cylindrical shape for one circumference.

According to a first aspect of the present disclosure, there is provided a collation device as defined in claim 1.

According to a second aspect of the present disclosure, in the collation device according to the first aspect, the collation image may be a single image.

According to a third aspect of the present disclosure, in the collation device according to the first aspect, the predetermined interval may be a regular interval.

According to a fourth aspect of the present disclosure, in the collation device according to the first aspect, the processor may collate the collation image and the registration image group in order, when the collation image is similar to any one of the plurality of registration images composing the registration image group by the threshold value or greater, end collation processing with a group of the remaining registration images not yet collated, and output coincidence as the collation result.

According to a fifth aspect of the present disclosure, in the collation device according to any one of the first to third aspects, the processor may collate the collation image and the registration image group, output coincidence as the collation result in a case where the collation image is similar to any one of the plurality of registration images composing the registration image group by a threshold value or greater, and re-collate a second collation image obtained by imaging the side surface at a different focal position and the registration image in a case where the collation image is not similar to all of the plurality of registration images composing the registration image group.

According to a sixth aspect of the present disclosure, in the collation device according to any one of the first to third aspects, the collation image may be obtained by imaging the side surface at an imaging distance shorter than a focal length of the registration image group at which the side surface is imaged.

According to a seventh aspect of the present disclosure, in the collation device according to any one of the first to third aspects, the processor may collate the collation image and the registration image group, output coincidence as the collation result in a case where the collation image is similar to any one of the plurality of registration images composing the registration image group by a threshold value or greater, and re-collate a second collation image obtained by imaging the side surface at a different angle in a circumferential direction and the registration images in a case where the collation image is not similar to all of the plurality of registration images composing the registration image group.

According to an eighth aspect of the present disclosure, in the collation device according to any one of the first to seventh aspects, the target having the elliptic cylindrical shape including the columnar shape may be a glass lens with the side surface having a ground glass shape.

According to the first aspect, in a case of imaging the side surface having the elliptic cylindrical shape with no reference mark for specifying a position of a registration image and collating a captured image with the registration images, collation with the registration images can be performed to perform unique identification without imaging the side surface having the elliptic cylindrical shape for one circumference.

According to the second aspect, collation with the registration images can also be performed using the single collation image to perform unique identification.

According to the third aspect, collation with the registration images can also be performed with an equal probability at any place.

According to the fourth aspect, the time of the collation processing can also be reduced.

According to the fifth to eighth aspects, collation accuracy can also be improved.


BRIEF DESCRIPTION OF THE DRAWINGS

Exemplary embodiment(s) of the present invention will be described in detail based on the following figures, wherein:

Fig. 1 is an overall configuration diagram of a system of an exemplary embodiment;
Figs. 2A to 2C are explanatory views of a random pattern depending on microscopic irregularity on a side surface having an elliptic cylindrical shape (including a columnar shape) as a target of the exemplary embodiment;
Fig. 3 is a configuration diagram of acquisition of a registration image of the exemplary embodiment;
Fig. 4 is an explanatory view of a registration image of the related art;
Fig. 5 is an explanatory view of a registration image of the exemplary embodiment;
Fig. 6 is an explanatory view of the registration image and a collation image of the exemplary embodiment;
Fig. 7 is a configuration diagram of a collation device of the exemplary embodiment;
Fig. 8 is a processing flowchart of the exemplary embodiment;
Fig. 9 is a detailed flowchart of registration image acquisition processing in Fig. 8;
Fig. 10 is a detailed flowchart of collation image acquisition processing in Fig. 8;
Fig. 11A is a detailed flowchart (first view) of image collation processing in Fig. 8;
Fig. 11B is a detailed flowchart (second view) of the image collation processing in Fig. 8;
Fig. 12 is an explanatory view showing a relationship between a registration image and an imaging distance of a first modification example;
Fig. 13 is a graph (first view) showing change in collation accuracy with respect to a registration image position (angle) of a first modification example;
Fig. 14 is an explanatory view showing deviation of a focal position of the first modification example;
Fig. 15 is a graph (second view) showing the change in collation accuracy with respect to the registration image position (angle) of the first modification example;
Fig. 16 is a detailed flowchart of image collation processing of the first modification example;
Fig. 17 is an explanatory view (first view) of a registration image and a collation image of a second modification example;
Fig. 18 is an explanatory view (second view) of the registration image and the collation image of the second modification example; and
Fig. 19 is a detailed flowchart of image collation processing of the second modification example.

DETAILED DESCRIPTION OF THE INVENTION

Hereinafter, an exemplary embodiment of the invention will be described based on the drawings.

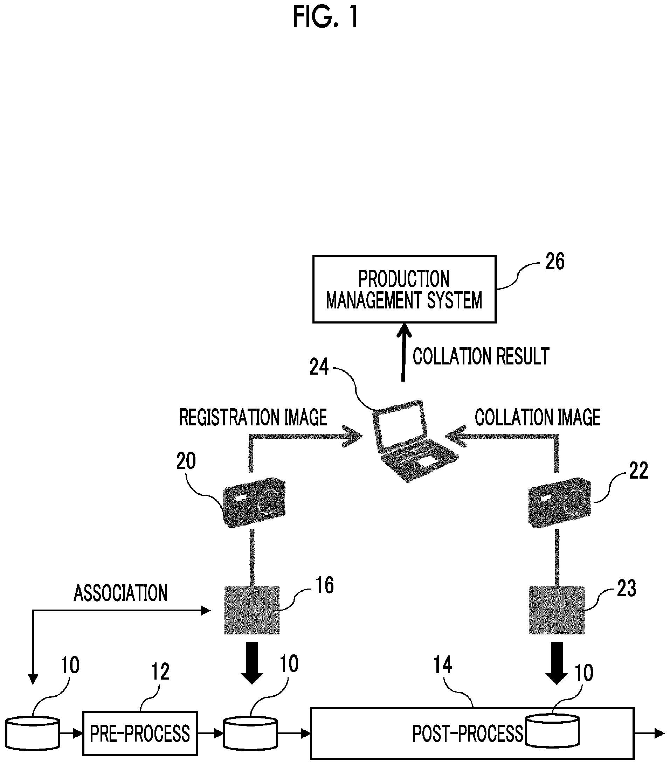

Fig. 1 is an overall configuration diagram of a system in the exemplary embodiment. An example of the system configuration of the exemplary embodiment is used for collation regarding whether or not a component in a pre-process and a post-process of a manufacturing process is identical in terms of traceability in the manufacturing process, in a component manufacturing individual identification.

In Fig. 1, a target 10 passes through a pre-process 12 in the manufacturing process and is imaged by a registration image capturing machine 20 in a last stage of the pre-process 12. A registration image 16 obtained through imaging with the registration image capturing machine 20 is associated with identification information ID for identifying the target 10 and is registered in a collation device 24.

The target 10 is a component that is subjected to various kinds of machining in the manufacturing process, and is a component having an elliptic cylindrical shape (including a columnar shape) in the exemplary embodiment. A specific example of the component having the elliptic cylindrical shape is a glass lens having a columnar shape, and a side surface of the glass lens is machined and processed in a ground glass shape. The glass lens having the columnar shape includes a convex glass lens or a concave glass lens that is represented by an aspheric lens. The registration image capturing machine 20 images a random pattern depending on microscopic irregularity on a side surface of the glass lens and registers a captured image as the registration image 16 in the collation device 24.

The target 10 succeeds to a pre-process 12 and is subjected to various kinds of processing in the post-process 14. In a transport process between the pre-process 12 and the post-process 14, sampling or lot confusion for the target 10 may occur. The same also applies to various processes of the post-process 14. At any timing of the post-process 14, a collation image capturing machine 22 images the random pattern depending on microscopic irregularity on the side surface of the glass lens as the target 10 and outputs a captured image as a collation image 23 to the collation device 24.

The collation device 24 collates the registration image 16 and the collation image 23 and determines whether or not both images coincide with each other. The collation device 24 outputs a collation result of the registration image 16 and the collation image 23 to a production management system 26. The collation device 24 calculates, for example, a degree of similarity of the registration image 16 and the collation image 23 and compares the calculated degree of similarity with a threshold value in size. In a case where the degree of similarity exceeds the threshold value, determination is made that the registration image 16 and the collation image 23 coincide with each other, and in a case where the degree of similarity does not exceed the threshold value, determination is made that the registration image 16 and the collation image 23 do not coincide with each other. Although the collation device 24 calculates the degree of similarity, for example, using a known collation algorithm, such as feature quantity matching depending on feature quantity detection or template matching using shading comparison of images, a calculation method of the degree of similarity is not limited thereto.

The production management system 26 acquires the collation result from the collation device 24 and reflects the collation result in a traceability state of the target 10. That is, the ID of the target 10 subjected to the pre-process 12 and the post-process 14 and an ID of a finished product in which the target 10 is incorporated are managed in association with each other.

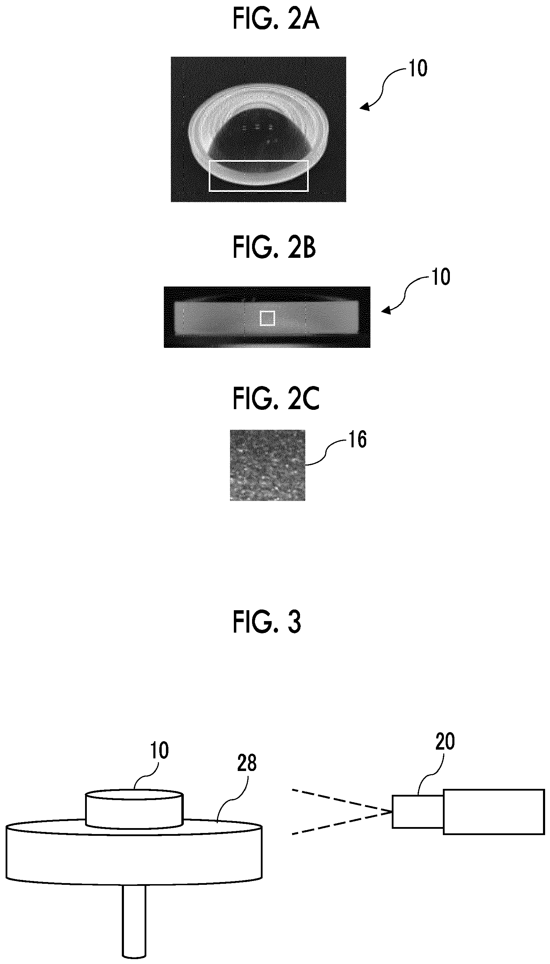

Fig. 2A is a perspective view of a glass lens having a columnar shape as an example of the target 10. The side surface of the glass lens is machined opaque in a ground glass shape as shown in Fig. 2B, and a random pattern of a microscopic pattern is formed. Specific examples of the random pattern depending on the microscopic pattern include a satin pattern. The satin pattern is not limited to surface machining, such as a ground glass shape, and is a concept including not only a satin pattern subjected to machining processing to metal or synthetic resin (plastic or the like) but also a wrinkle pattern obtained by surface texturing or a randomly woven fibrous pattern and a random microscopic dot pattern depending on printing or a random particle distribution depending on printing with ink including luminous body particles. In addition, not only a satin pattern that is formed unintentionally and accidentally but also a satin pattern that is formed intentionally for the identification or collation is included. Fig. 2C is an enlarged view of a part (in the drawing, a region surrounded by a white frame and a region of an angle of 0.1 to several mm of the side surface shown in Fig. 2B, and shows a microscopic random pattern. The random pattern is accidentally given to the target 10 and uniquely corresponds to the target 10. Thus, the random pattern can be used for the identification of the target 10.

Fig. 3 shows a configuration in a case where the registration image 16 is captured with the registration image capturing machine 20. The target 10 is placed on a rotation stage 28, and the side surface of the target 10 is imaged with the registration image capturing machine 20 fixed at a predetermined position with respect to the target 10. An image having a predetermined size is cut from an image obtained through imaging and is registered as the registration image 16 in the collation device 24.

In a case of collating the registration image 16 and the collation image 23 in the collation device 24, there is a need to make the position of the registration image 16 coincide with the position of the collation image 23 in the target 10. As a general method therefor, the following two methods are possible.

(1) The coordinates of the collation image 23 cut from the image obtained through imaging with the collation image capturing machine 22 are specified from a position of a pattern image in the image.

(2) The coordinates of the collation image 23 cut from the image obtained through imaging with the collation image capturing machine 22 are specified from absolute coordinates based on a designated position in the image.

Note that, since the method (1) supposes that a specific pattern to be a sign is present in the image, the method (1) cannot be used in a case where such a specific pattern to be a sign is not present. Furthermore, since the method (2) supposes that the designated position in the image can be specified, the method (2) cannot be used in a case where such a designated position is hardly specified.

In a case where the target 10 is a columnar glass lens with a side surface having a ground glass shape, since a specific pattern is not present on the side surface, and a position (an angle in a circumferential direction) of the side surface in an image is unclear, both methods (1) and (2) described above are hardly employed.

Of course, while a case where any mark, such as a minute flaw, is given to the glass lens having the columnar shape is also considered, this may affect the optical performance (refractive index and the like) of the glass lens.

In this way, in a case where there is no mark to be a sign in the target 10 or a mark to be a sign is hardly attached in the nature of the target 10, there is a need to image the whole circumference of the side surface of the glass lens for image collation.

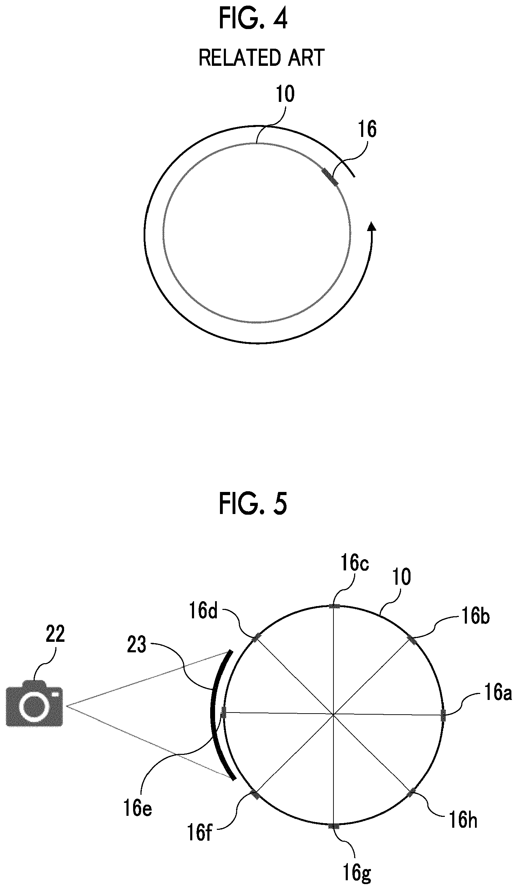

Fig. 4 schematically shows a state of imaging the whole circumference of the side surface of the glass lens as the target 10. Although the registration image 16 is acquired at a specific place of the side surface of the glass lens and is registered in the collation device 24, in a case where there is no sign for specifying the position of the registration image 16, the position is unclear. For this reason, the whole circumference of the side surface of the glass lens is imaged, and an image of the whole circumference of the side surface is collated as a collation image with the registration image 16, causing a considerable increase in calculation cost.

Accordingly, in the exemplary embodiment, the registration images 16 are acquired at a plurality of positions at a predetermined interval over the whole circumference of the side surface of the glass lens as the target 10, and a plurality of registration images 16 are registered in the collation device 24. Then, in imaging the side surface of the glass lens with the collation image capturing machine 22, at least one registration image 16 among a plurality of registration images 16 is included within a range of an angle of view of the collation image capturing machine 22.

Fig. 5 is an explanatory view of acquisition of a collation image in the exemplary embodiment. The registration images 16 are registered at a plurality of positions at a predetermined interval over the whole circumference of the side surface of the glass lens. Specifically, eight registration images 16 are registered at regular intervals over the whole circumference of the side surface of the glass lens. In the drawing, the eight registration images 16 are shown as a registration image 16a, a registration image 16b, a registration image 16c, ..., and a registration image 16h. In the following description, a plurality of registration images 16a to 16h are appropriately collectively referred to as the registration images 16.

Then, in capturing a collation image with the collation image capturing machine 22, only one place of the side surface of the glass lens is imaged. In this case, in a case where the interval of a plurality of registration images 16 is appropriately set with respect to the angle of view of the collation image capturing machine 22, at least one registration image 16 among a plurality of registration images 16 is always included within the angle of view of the collation image capturing machine 22. For example, as shown in Fig. 5, the registration image 16e among a plurality of registration images 16 is included in the collation image 23 obtained with the collation image capturing machine 22. In this way, at least one registration image 16 among a plurality of registration images 16 is secured to be always included in the collation image 23 obtained through imaging at one place of the side surface of the glass lens, whereby collation with the registration image 16 can be performed without imaging the whole circumference of the side surface of the glass lens with the collation image capturing machine 22, and an increase in calculation cost can be suppressed.

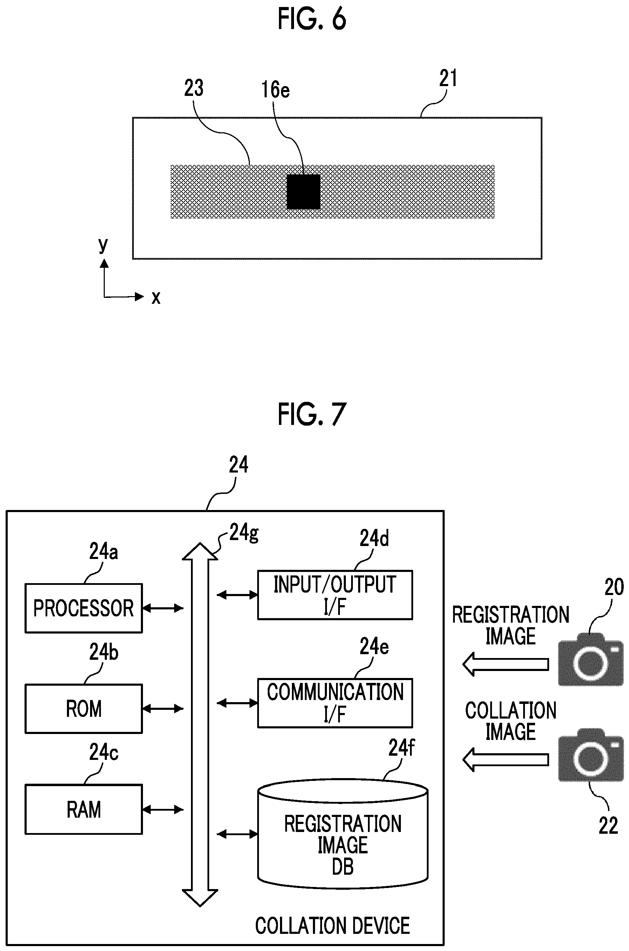

Fig. 6 schematically shows a relationship between the registration image 16e and the collation image 23 in Fig. 5. The collation image 23 that has a width greater than a predetermined and known width of the registration image 16e in an imaging range 21 obtained through imaging with the collation image capturing machine 22 and is in a rectangular shape having a given length included in the imaging range 21 is set, and the registration image 16e is included in the collation image 23. The number n of registration images 16 for allowing at least one registration image (for example, the registration image 16e) among a plurality of registration images 16 to be always included is as follows.

$$\text{Number n of registration images 16} = \frac{\text{(Length of whole circumference of glass lens)}}{\text{(Length of collation image 23} - \text{Length of registration image 16)}}$$

Here, the length of the collation image 23 or the length of the registration image 16 is defined as a size in a longitudinal direction (x direction) in Fig. 6. The width of the collation image 23 or the width of the registration image 16 is defined as a size in a direction (y direction) perpendicular to the longitudinal direction in Fig. 6.

In a case where the number of registration images 16 is n, a range of searching with respect to the collation image is 1/n of the length of the whole circumference of the glass lens, and thus, calculation cost is reduced as much. Since collation of the collation image 23 obtained through imaging and the n registration images 16, that is, 1:n collation is performed, a fast computation algorithm can also be used directly. There is no need for detailed control or management, such as positioning of the glass lens in the circumferential direction with respect to the registration image capturing machine 20 and the collation image capturing machine 22 at the time of registration and collation of the registration images 16.

Fig. 7 is a configuration diagram of the collation device 24. The collation device 24 is configured with a computer, is connected to the registration image capturing machine 20 and the collation image capturing machine 22 by a communication network, and is connected to the production management system 26 by the communication network.

The collation device 24 includes a processor 24a, a ROM 24b, a RAM 24c, an input/output interface (I/F) 24d, a communication interface (I/F) 24e, and a registration image database (DB) 24f, which are connected to perform data transmission and reception via a bus 24g.

The processor 24a reads programs stored in the ROM 24b or other program memories and executes the programs using the RAM 24c as a working memory to execute various kinds of processing. The processing of the processor 24a is listed as follows. · The processor 24a receives a plurality of registration images 16 from the registration image capturing machine 20 via the communication I/F 24e and stores a plurality of registration images 16 in the registration image DB 24f. In this case, the ID of the glass lens as the target 10 and a plurality of registration images 16 are stored in the registration image DB 24f in association with each other.

· The processor 24a receives the collation image 23 from the collation image capturing machine 22 via the communication I/F 24e and sequentially collates the collation image 23 with a plurality of registration images 16 stored in the registration image DB 24f.
· The processor 24a stores a collation result of the registration image 16 and the collation image 23 in the registration image DB 24f and transmits the collation result to the production management system 26 through the communication I/F 24e.

The registration image DB 24f is configured with a storage device, such as a hard disk or a solid state disk (SSD), and stores a plurality of registration images. The registration image DB 24f functions as a memory that stores, as a registration image group, a random pattern depending on microscopic irregularity on the side surface of the target 10 having an elliptic cylindrical shape including a columnar shape.

Here, although the processor 24a sequentially compares a plurality of registration images 16 with one collation image 23, in a case where any one of the degrees of similarity of a plurality of registration images 16 and the collation image 23 exceeds the threshold value, the processor 24a determines that both images coincide with each other. On the other hand, in a case where all of the degrees of similarity of a plurality of registration images 16 and the collation image 23 do not exceed the threshold value, the processor 24a determines that both images do not coincide with each other. Specifically, in a case of the eight registration images 16a to 16h, in a case where the degree of similarity to any one of the registration images 16a to 16h exceeds the threshold value, the processor 24a determines coincidence, and in a case where all of the degrees of similarity to the registration images 16a to 16h do not exceed the threshold value, the processor 24a determines non-coincidence.

The collation device 24 may be configured with a personal computer (PC) or may be configured with a server computer. Although the registration image DB 24f is provided in the collation device 24 in Fig. 7, the registration image DB 24f may be configured with a computer separate from the collation device 24, and the collation device 24 and the registration image DB 24f may be connected by the communication network.

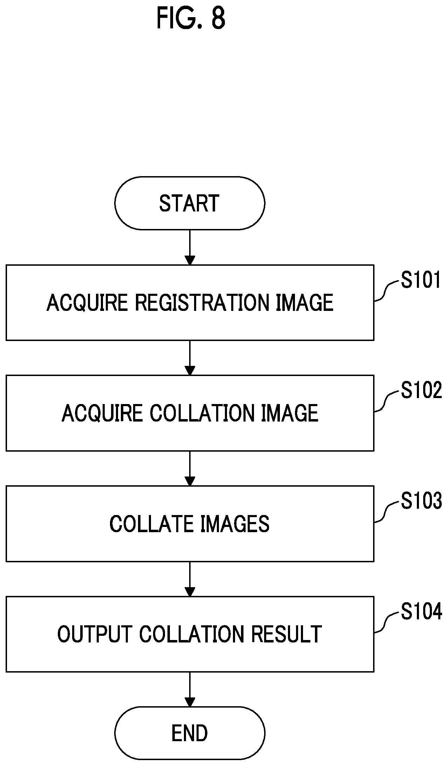

Fig. 8 is an overall processing flowchart of the collation device 24. The processing is executed with the processor 24a of the collation device 24.

The processor 24a first acquires the registration images 16 of the glass lens as the target 10 (S101). That is, the registration images 16 are acquired at a plurality of positions at predetermined intervals over the whole circumference of the side surface of the glass lens. For example, as shown in Fig. 5, the eight registration images 16a to 16h in total are acquired at the positions at regular intervals over the whole circumference of the side surface of the glass lens. Although the acquisition of the registration images 16 can be performed, for example, after the completion of the pre-process 12 of the manufacturing process, the invention is not limited thereto, and the acquisition may be performed at any timing. The processor 24a is connected to the registration image capturing machine 20 by the communication network, can transmit a control signal for instructing the registration image capturing machine 20 to capture the registration images, and can receive and acquire the registration images transmitted from the registration image capturing machine 20. Of course, a worker who manages the manufacturing process may operate the registration image capturing machine 20 to capture the registration images and to transmit the registration images to the collation device 24.

Next, the processor 24a acquires the collation image 23 of the glass lens as the target 10 (S102). That is, the collation image 23 is acquired at any position on the side surface of the glass lens. Although the acquisition of the collation image 23 can be performed, for example, at any timing of the post-process 14 of the manufacturing process, the invention is not limited thereto, and the acquisition may be performed at a timing immediately after sampling or lot confusion of a product occurs. The processor 24a is connected to the collation image capturing machine 22 by the communication network, can transmit a control signal for instructing the collation image capturing machine 22 to capture the collation image, and can receive and acquire the collation image transmitted from the collation image capturing machine 22. Of course, the worker who manages the manufacturing process may operate the collation image capturing machine 22 to capture the collation image and to transmit the collation image to the collation device 24.

Next, the processor 24a collates a plurality of registration images 16 and the collation image 23 (S103). That is, the processor 24a calculates the degree of similarity of each of a plurality of registration images 16 and the collation image 23 and determines whether or not the calculated degree of similarity exceeds the threshold value.

Then, after performing image collation, the processor 24a outputs the collation result to a display device or the like via the input/output I/F 24d and outputs the collation result to the production management system 26 via the communication I/F 24e (S104). In a case of outputting the collation result to the display device, the worker who manages the manufacturing process can visually recognize the collation result to facilitate the management of the target 10.

Hereinafter, each kind of processing of Fig. 8 will be described in more detail.

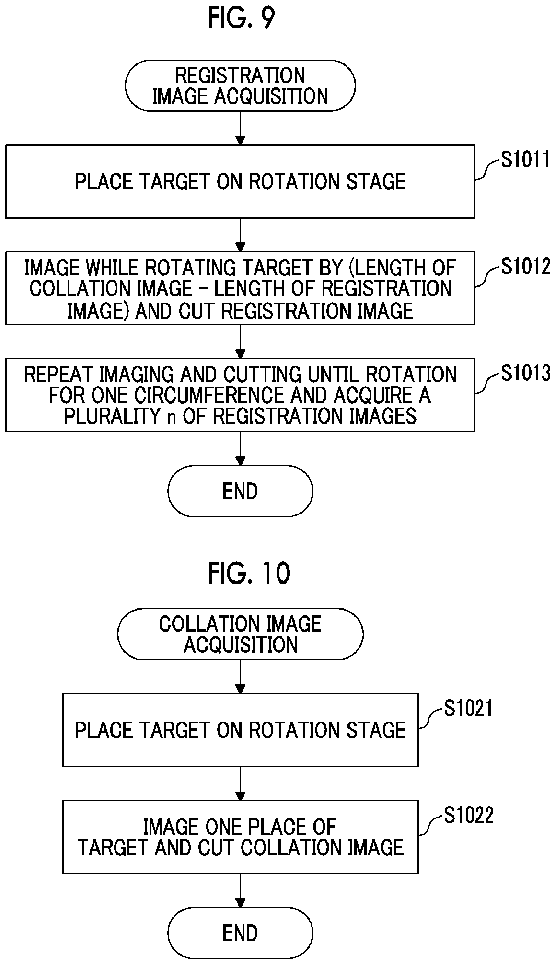

Fig. 9 is a detailed flowchart of registration image acquisition processing.

First, the glass lens as the target 10 is placed on the rotation stage 28 (S1011). In this case, a distance between the side surface of the glass lens and the registration image capturing machine 20 is adjusted, and a focal position of the registration image capturing machine 20 is focused on the side surface of the glass lens conforming to the side surface position of the glass lens.

Next, the glass lens as the target 10 is imaged while rotating by (length of collation image - length of registration image), and the registration images are cut (S1012). That is, the side surface of the glass lens is imaged with the registration image capturing machine 20, and the registration image having a predetermined size is cut. Thereafter, the rotation stage 28 is rotationally driven to rotate the glass lens by (length of collation image - length of registration image). The length of the registration image is a length that is set in advance and known. The length of the collation image is defined by the angle of view of the registration image capturing machine 20.

Then, the processing of S1012 is repeatedly executed until the side surface of the glass lens is rotated for one circumference, and a plurality n of registration images are acquired (S1013). Specifically, the following processing is repeated and the eight registration images 16a to 16h in total are acquired.

(1) capturing the registration image 16a
(2) rotating the glass lens by (length of collation image - length of registration image)
(3) capturing the registration image 16b
(4) rotating the glass lens by (length of collation image - length of registration image)
(5) capturing the registration image 16c
(6) rotating the glass lens by (length of collation image -length of registration image)
(7) capturing the registration image 16d
(8) rotating the glass lens by (length of collation image - length of registration image)
(9) capturing the registration image 16e
(10) rotating the glass lens by (length of collation image - length of registration image)
(11) capturing the registration image 16f
(12) rotating the glass lens by (length of collation image - length of registration image)
(13) capturing the registration image 16g
(14) rotating the glass lens by (length of collation image - length of registration image)
(15) capturing the registration image 16h

With this, the registration images 16a to 16h at regular intervals for (length of collation image - length of registration image) are acquired.

The acquired registration images 16a to 16h are stored in the registration image DB 24f in association with the ID of the glass lens. For example, in association with the ID of the glass lens, a data set (ID, registration image 16a, registration image 16b, registration image 16c, registration image 16d, registration image 16e, registration image 16f, registration image 16g, registration image 16h) is stored in the registration image DB 24f.

The registration image capturing machine 20 appropriately satisfies, for example, a condition that stable close-up imaging can be performed with high resolution and irradiation of the glass lens with light for objecting microscopic irregularity on the side surface of the glass lens can be stably performed.

Although the registration image DB 24f may be configured with a computer separated from the collation device 24 as described above, the ID of the glass lens as the target 10 and a plurality of acquired registration images 16a to 16h may be managed in a separate computer.

Fig. 10 is a detailed flowchart of collation image acquisition processing.

First, the glass lens as the target 10 is placed on the rotation stage 28 (S1021). The rotation stage 28 in this case may be identical to or different from the rotation stage 28 in a case where the registration images 16 are acquired. Since the collation image 23 is captured from only one place, the rotation stage is not needed, and a non-rotation fixed stage may be used. In this case, a distance between the collation image capturing machine 22 and the rotation stage (or the fixed stage) is adjusted, and a focal position of the collation image capturing machine 22 is focused on the side surface of the glass lens conforming to the side surface of the glass lens. In more detail, the focal position of the collation image capturing machine 22 is focused on a cross point of a line segment that connects the collation image capturing machine 22 and the center of curvature of the glass lens having the columnar shape, and the side surface of the glass lens, that is, at a nearest position of the collation image capturing machine 22 and the glass lens.

Then, one place of the side surface of the glass lens as the target 10 is imaged with the collation image capturing machine 22, and one collation image 23 is cut (S1022). The length of the collation image 23 is a length defined by the angle of view of the collation image capturing machine 22 and is greater than the length of the registration image 16. The width of the collation image 23 is also greater than the width of the registration image 16 (see Fig. 6).

Since the interval of a plurality of registration images 16 is defined by (length of collation image - length of registration image), at least one registration image among a plurality of registration images 16a to 16h is included in one collation image 23 obtained through imaging at one place. For example, only the registration image 16e among a plurality of registration images 16a to 16h is included in one collation image 23. Alternatively, the registration images 16e and 16f among a plurality of registration images 16a to 16h are included in one collation image 23.

Similarly to the registration image capturing machine 20, the collation image capturing machine 22 appropriately satisfies, for example, a condition that stable close-up imaging can be performed with high resolution and irradiation of the glass lens with light for objecting microscopic irregularity on the side surface of the glass lens can be stably performed. Although the collation image capturing machine 22 is appropriately, for example, an identical model to the registration image capturing machine 20, the invention is not limited thereto as long as a substantially identical imaging condition to an imaging condition at the time of capturing the registration images is obtained.

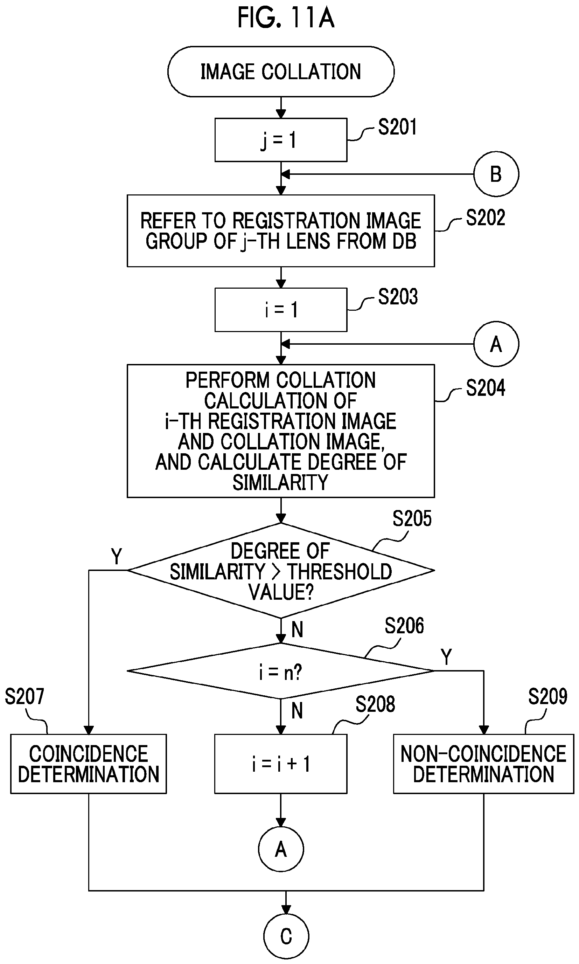

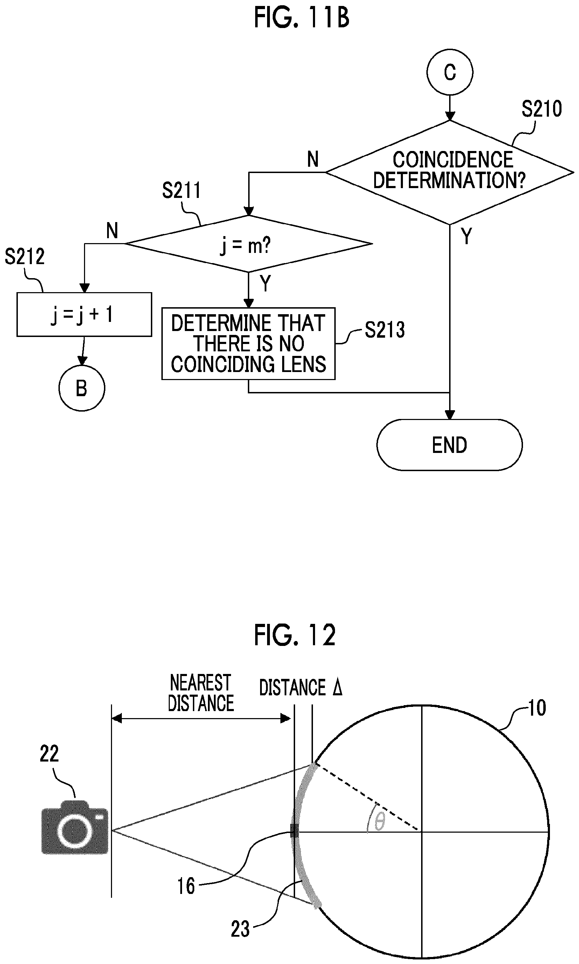

Figs. 11A and 11B are detailed flowcharts of image collation. The processing is processing in a case where a plurality of registration images 16 are registered, and the collation image 23 is acquired. The flowchart is a flowchart where there is a glass lens group having a plurality (m) of glass lenses to be a collation target, the collation image is collated with the registration image group one by one, and in a case of non-coincidence, collation with the next glass lens is performed.

First, a counter j for counting the glass lens group is initialized to j = 1 (S201), and a registration image group of a j-th glass lens is referred to from the registration image DB 24f (S202) . Next, a counter i for counting the registration images is initialized to i = 1 (S203), and collation calculation of an i-th registration image and the collation image is performed and the degree of similarity is calculated (S204). That is, the registration images 16a to 16h are set as follows.

    registration image 16a: first
    registration image 16b: second
    registration image 16c: third
    registration image 16d: fourth
    registration image 16e: fifth
    registration image 16f: sixth
    registration image 16g: seventh
    registration image 16h: eighth

Then, the first registration image 16a is read from the registration image DB 24f to perform collation calculation with the collation image 23, and the degree of similarity of both images is calculated. In regard to the degree of similarity, a known algorithm can be used as described above.

In a case where the degree of similarity of the first registration image 16a and the collation image 23 is calculated, the calculated degree of similarity is compared with the threshold value, and determination is made whether or not the degree of similarity exceeds the threshold value (S205).

The image collation has an error rate due to fluctuation in an input of an image sensor of the registration image capturing machine 20 or the collation image capturing machine 22, a quantization error, or the like. The error rate is composed of two rates of an erroneous rejection rate that is a probability of determining as false despite true and an erroneous acceptance rate that is a probability of determining as true despite false. Both rates are in a relationship of trade-off, and in a case where one rate decreases, the other rate increases. Accordingly, the threshold value is set such that loss is minimized in an application target of collation determination.

As a result of size comparison of the degree of similarity with the threshold value, in a case where the degree of similarity exceeds the threshold value (in S205, YES), the processor 24a determines that the registration image 16a and the collation image 23 coincide with each other (S207) . Then, the process progresses to processing of Fig. 11B. In a case where both images coincide with each other, this means that the glass lens specified by the registration image 16 and the glass lens acquired by the collation image 23 are identical glass lenses.

On the other hand, in a case where the degree of similarity does not exceed the threshold value (in S205, NO), next, determination is made whether or not the counter i is equal to n (in a case of the registration images 16a to 16h, n = 8) that is the number of registration images 16 (S206), and in a case where i does not yet reach n (in S206, NO), the counter i is incremented by 1 (S208), and the processing after S204 is repeated. That is, the second registration image 16b is read from the registration image DB 24f to perform collation calculation with the collation image 23, the degree of similarity of both images is calculated, determination is made whether or not the degree of similarity exceeds the threshold value, in a case where the degree of similarity exceeds the threshold value, determination is made that both images coincide with each other, and in a case where the degree of similarity does not exceed the threshold value, next, the degree of similarity of the third registration image 16c and the collation image is calculated.

The above-described processing is repeatedly executed until i = n (S206). Then, in a case where the degrees of similarity to all of the registration images 16 of the first registration image 16a to the eighth registration image 16h do not exceed the threshold value (in S206, YES), determination is made that both images do not coincide with each other (S209) . This means that the glass lens specified by the registration image 16 and the glass lens acquired by the collation image 23 are different glass lenses. Then, the process progresses to processing of Fig. 11B.

In Fig. 11B, a result of coincidence determination is referred to (S210), and in a case where there is coincidence determination (S207), the processing ends directly. On the other hand, in a case of determination as non-coincidence (S209), next, whether or not the counter j for counting the glass lens group is an upper limit value m of the number of glass lenses (S211), in a case where the counter j does not reach the upper limit m, the counter j is incremented by 1 to progress to the next lens (S212), and the processing after S202 of Fig. 11A is repeated. In a case where the counter j reaches the upper limit value m (in S211, YES), determination is finally made that there is no coinciding glass lens (S213), and the processing ends.

In this way, a plurality of registration images 16 are prepared such that at least one registration image is always included in the collation image 23 obtained by imaging the side surface of the glass lens at one place, whereby there is no need to image the whole circumference of the side surface of the glass lens, and the registration image 16 and the collation image 23 can be collated to trace the identity of the glass lenses in the manufacturing process.

<First Modification Example>

In the exemplary embodiment, although a plurality of registration images 16 are prepared such that at least one registration image is always included in the collation image 23 obtained by imaging the side surface of the glass lens at one place, a position where the registration image 16 is present in the collation image 23 is not determined, and the registration image 16 may be at the substantially center of the collation image 23 or the registration image 16 may be positioned in an end portion of the collation image 23. In a case of imaging the side surface of the glass lens as the target 10 with the collation image capturing machine 22, imaging is performed while the focusing position of the collation image capturing machine 22 conforms to the side surface of the glass lens, in more detail, the nearest distance of the side surface of the glass lens. For this reason, focusing is made at the substantially center of the angle of view of the collation image capturing machine 22; however, since the distance from the collation image capturing machine 22 increases depending on the curvature of the side surface of the glass lens in the end portion of the angle of view, focusing deviates from the focusing position, and the collation image is blurred.

Accordingly, the registration image 16 may be positioned at the substantially center of the collation image 23, and the focused collation image 23 and the registration image 16 may be collated; however, in a case where the registration image 16 is positioned in the end portion of the collation image 23, and the non-focused and blurred collation image 23 and the registration image 16 are collated, correct collation calculation cannot be performed.

Fig. 12 schematically shows a positional relationship between the collation image capturing machine 22 and the glass lens as the target 10. In a case where the collation image capturing machine 22 and the side surface of the glass lens are separated by the focusing distance, focusing is made at the substantially center of the collation image 23 defined by the angle of view of the collation image capturing machine 22; however, since focusing deviates far away from the focusing position far away by a distance $\Delta$ depending on the curvature of the side surface in the end portion of the collation image 23, the collation image 23 is blurred. In a case where any one of a plurality of registration images 16 is at the substantially center of the angle of view, since the collation image 23 at the moment is focused, determination is correctly made that the degree of similarity exceeds the threshold value and both images coincide with each other; however, in a case where any one of a plurality of registration images 16 is in the end portion of the angle of view, and the distance from the collation image capturing machine 22 is (focusing distance + $\Delta$), since the collation image 23 itself is blurred, the degree of similarity does not exceed the threshold value, and even though determination should be originally made that both images coincide with each other, erroneous determination may be made that both images do not coincide with each other.

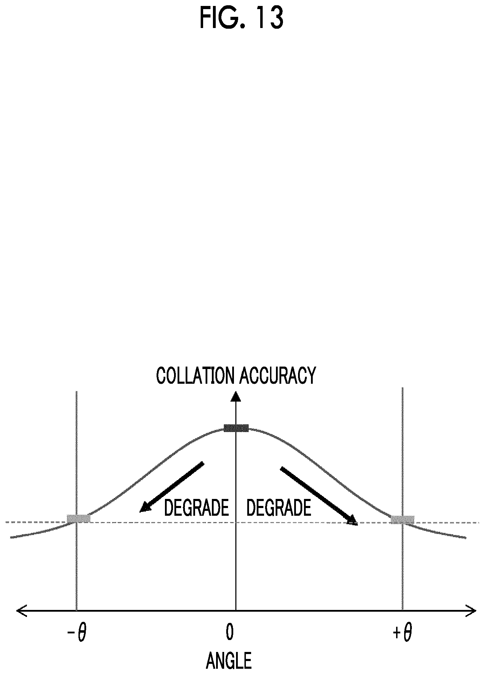

Fig. 13 shows a relationship between an angle from the center of the angle of view of the collation image capturing machine 22 and collation accuracy. The horizontal axis is an angle, 0 degrees correspond to the center of the angle of view, and +$\theta$ and -$\theta$ correspond to both end portions of the angle of view. The vertical axis is collation accuracy. In a case where the registration image 16 is positioned at the center of the angle of view, collation accuracy is the maximum, and as the angle increases in a + direction and a - direction, the collation accuracy is degraded depending on the magnitude of blur of the collation image 23.

Accordingly, in a case where the registration image 16 is positioned at the substantially center of the collation image 23, the collation accuracy is secured; however, in a case where the registration image 16 is positioned at other positions, the collation accuracy is not secured, and as a result, a collatable range is restricted to the substantially center of the collation image.

Of course, since $\Delta$ is relatively decreased in a case where the curvature of the side surface of the glass lens as the target 10 is relatively small, the collation accuracy can be secured over the substantially entire region of the collation image; however, in a case where the curvature of the side surface is relatively large, a problem may occur.

In a case where a depth of field of the collation image capturing machine 22 is sufficiently deep, even though focusing deviates by the distance $\Delta$, focusing can be kept within the focusing distance; however, in general, in imaging the random pattern of microscopic irregularity on the side surface of the glass lens, since imaging is performed at a close distance, the depth of field is relatively shallow, and in a case where focusing deviates by the distance $\Delta$, focusing is out of the focusing position and the collation image 23 is often blurred.

Accordingly, in a first modification example, the focusing position of the collation image capturing machine 22 is shifted to a position entering inside the side surface of the glass lens from the side surface of the glass lens by a minute distance, not the side surface of the glass lens (more accurately, the position on the side surface of the glass lens at the nearest distance from the collation image capturing machine 22).

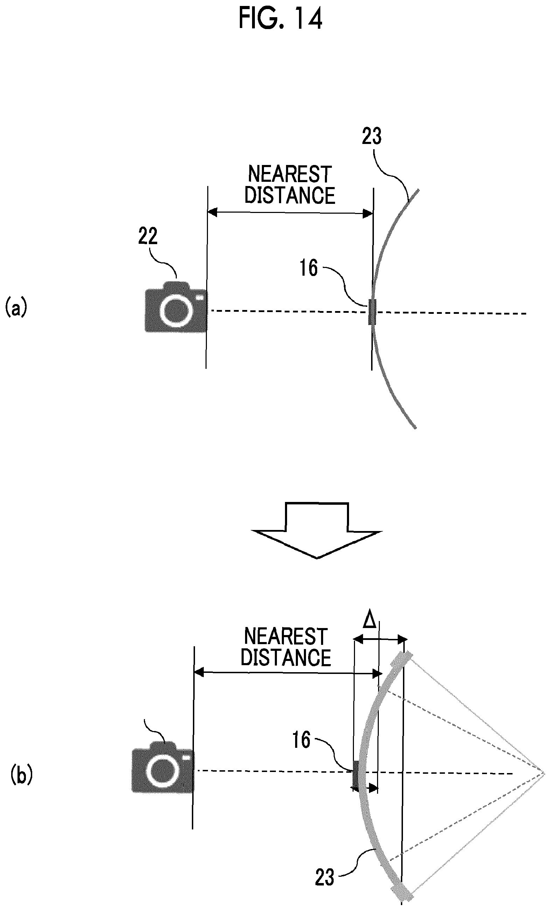

Fig. 14 schematically shows a positional relationship between the collation image capturing machine 22 and the glass lens as the target 10 of the first modification example. (a) of Fig. 14 shows a case where the focusing position of the collation image capturing machine 22 conforms to the position at the nearest distance on the side surface of the glass lens. (b) of Fig. 14 shows a state in which the focusing position is shifted inside the glass lens by a minute distance from the state of (a) of Fig. 14. This corresponds to a state where the focusing position of the collation image capturing machine 22 is shifted by the minute distance in a direction from the center of the collation image 23 to the end portion.

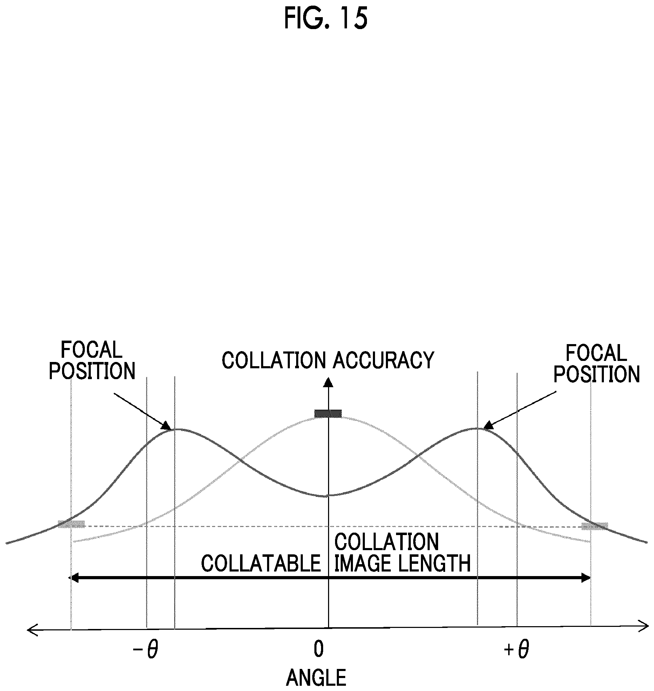

Fig. 15 shows a relationship between the angle and the collation accuracy in a state in which the focusing position is shifted inside the glass lens by the minute distance. In comparison with the collation accuracy shown in Fig. 13, while the collation image capturing machine 22 is focused on the side surface of the glass lens at the angle = 0 degrees in Fig. 13, the collation image capturing machine 22 is focused at the angle between 0 degrees and $\theta$ degrees in Fig. 15. Here, in a case where the angle of the focusing position is referred to as $\delta$, $0 < \delta < \theta$.

The collation accuracy is the maximum at angles +$\delta$ and -$\delta$, and since the collation image 23 is blurred, the collation accuracy is degraded at the angle of 0 degrees. In a case where the angle increases more than the angle +$\delta$ in the + direction, the collation accuracy is degraded, and in a case where the angle increases more than the angle -$\delta$ in the - direction, the collation accuracy is degraded similarly. Note that, since the collation accuracy is the maximum at the angles +$\delta$ and -$\delta$, the degree of degradation of the collation accuracy at the angles +$\theta$ and -$\theta$ is small compared to the case of Fig. 13, and the collation accuracy is comparatively maintained. In a case where allowable collation accuracy is referred to as Sth, in the case of Fig. 15, an angle range satisfying the allowable collation accuracy Sth increases compared to the case of Fig. 13, and this means that, even in a case where the registration image 16 is not present at the substantially center of the collation image 23 but is present in the end portion of the collation image 23, since an amount of image blur in the end portion of the collation image 23 is relatively small, and the degree of degradation of the collation accuracy is also small, collation with the registration image 16 is possible.

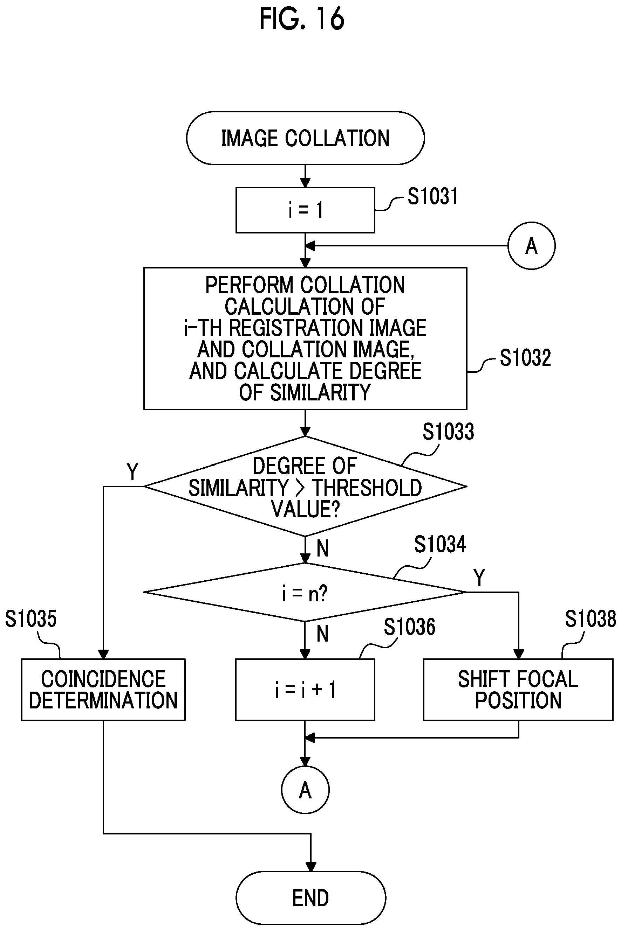

Fig. 16 is a processing flowchart of the first modification example. A difference from Figs. 11A and 11B is processing in a case where determination is made that all of the degrees of similarity to a plurality of registration images 16 do not exceed the threshold value for a certain glass lens. The same processing is also repeated for other glass lenses.

In the exemplary embodiment, in a case where determination is made that all of the degrees of similarity to a plurality of registration images 16 do not exceed the threshold value, determination is made that the registration image 16 and the collation image 23 do not coincide with each other. In contrast, in the first modification example, the position of the registration image 16 in the collation image 23 is present, for example, in the end portion of the collation image 23, there is a possibility that the degree of similarity does not exceed the threshold value due to degradation of the collation accuracy caused by the blur of the collation image 23 in the end portion. In light of this, in a case where determination is made to be YES in S1034, the focusing position of the collation image capturing machine 22 is shifted from the nearest distance on the side surface of the glass lens inside the glass lens by a minute distance (S1038). A shift amount is any angle $\delta$ satisfying $0 < \delta < \theta$. After the focusing position is shifted, the processing after S1032 is repeated.

In the exemplary embodiment, the registration images 16 and the collation image 23 are collated with imaging of one place on the side surface of the glass lens. In contrast, in the first modification example, in a case where the registration image 16 and the collation image 23 are collated and do not coincide with each other with first imaging of one place on the side surface of the glass lens, the focal position is changed to perform second imaging of one place on the side surface of the glass lens, and the registration image 16 and the collation image 23 are collated.

<Second Modification Example>

There is no guarantee that the glass lens having the columnar shape as the target 10 is necessarily a perfect column, and variation in outer diameter may be present. Since deviation may occur in the positional relationship between the collation image capturing machine 22 and the glass lens, the collation image 23 may be imaged in a focusing state, and image blur may be present.

Accordingly, in the second modification example, after the collation image 23 is acquired by imaging one place on the side surface of the glass lens, the glass lens is rotated by a predetermined angle, for example, $(1/2)\theta$ to capture the collation image 23.

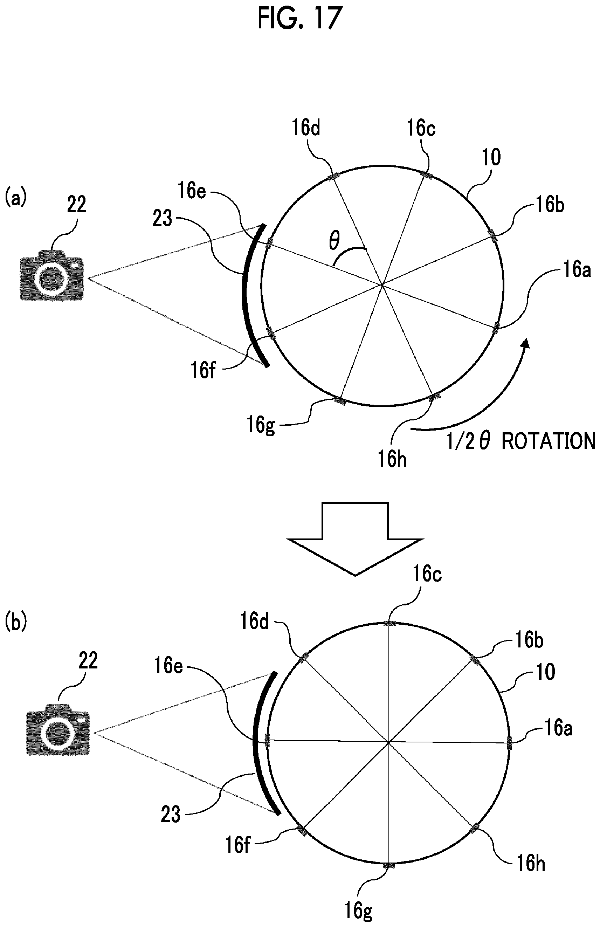

Fig. 17 schematically shows rotation processing of the second modification example. (a) of Fig. 17 shows a state in which one place on the side surface of the glass lens as the target 10 is imaged with the collation image capturing machine 22. The registration images 16e and 16f among a plurality of registration images 16a to 16h are present in both end portions of the acquired collation image 23.

In this case, as described in the first modification example, focusing may not be made and image blur may be present in both end portions of the collation image 23. Alternatively, focusing may not be made and image blur may be present in both end portions of the collation image 23 due to variation in outer diameter of the glass lens.

Accordingly, after the collation image 23 is acquired by imaging one place on the side surface of the glass lens, the glass lens is rotated by a predetermined angle, specifically, $(1/2)\theta$.

(b) of Fig. 17 shows a state in which the glass lens is rotated by $(1/2)\theta$. In a case where the glass lens is rotated by $(1/2)\theta$, the registration image 16e positioned in the end portion of the collation image 23 is positioned at the substantially center of the collation image 23, and in a case where focusing is made at the substantially center of the collation image 23, the collation accuracy of the registration image 16e and the collation image 23 can be guaranteed.

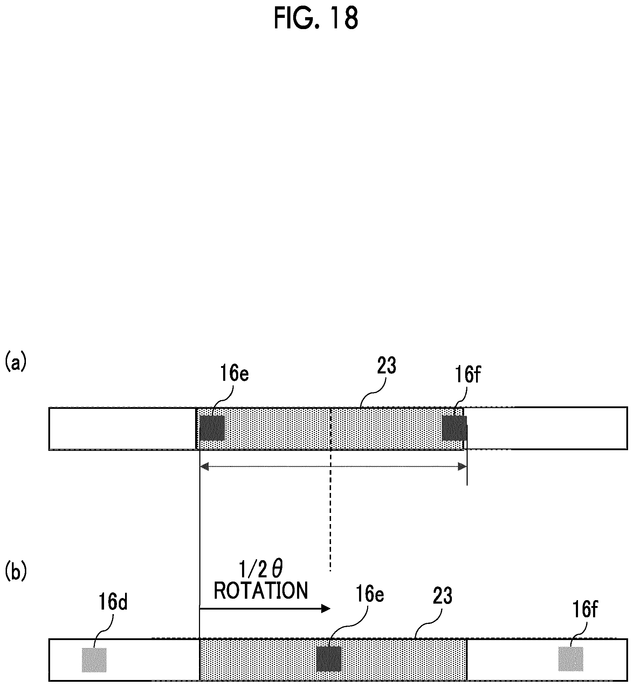

Fig. 18 schematically shows a relationship between the registration image 16 and the collation image 23 corresponding to the rotation processing of Fig. 17.

(a) of Fig. 18 shows a case where the registration image 16e is present in a left end portion of the collation image 23, and the registration image 16f is present in a right end portion of the collation image 23. In a case where focusing deviates from the focusing position in both end portions of the collation image 23, image blue occurs in both end portions of the collation image 23. For this reason, even though the glass lenses coincide with each other, both the degree of similarity to the registration image 16e and the degree of similarity to the registration image 16f do not exceed the threshold value, and thus, erroneous determination may be made as non-coincidence.

(b) of Fig. 18 shows a state in which the glass lens is rotated by $(1/2)\theta$, and shows a case where the registration image 16e is present at the substantially center of the collation image 23. In a case where the focusing state is brought at the center of the collation image 23, the degree of similarity of the registration image 16e and the collation image 23 exceeds the threshold value, and correct determination can be made as coincidence.

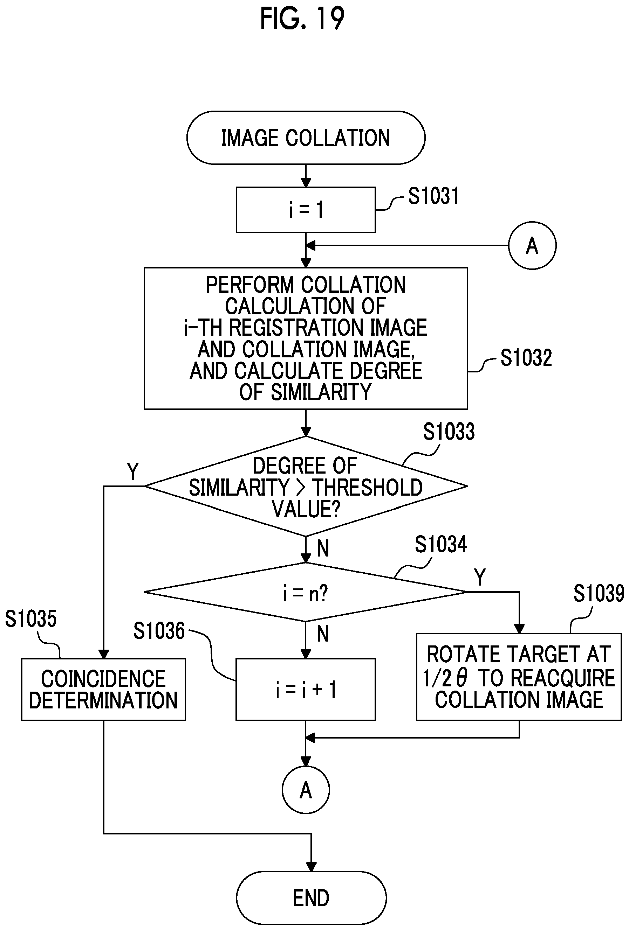

Fig. 19 is a processing flowchart of the second modification example.

A difference from Figs. 11A and 11B is processing in a case where determination is made that all of the degrees of similarity to a plurality of registration images 16 do not exceed the threshold value for a certain glass lens. The same processing is also repeated for other glass lenses.

In the exemplary embodiment, in a case where determination is made that all of the degrees of similarity to a plurality of registration images 16 do not exceed the threshold value, determination is made that the registration image 16 and the collation image 23 do not coincide with each other. In contrast, in the second modification example, the glass lens as the target 10 is rotated by a given angle, specifically, (1/2)θ (S1039) . In a case where the glass lens is placed on the rotation stage 28, the glass lens can be rotated by rotationally driving the rotation stage 28. After the glass lens is rotated, the processing after S1032 is repeated.

In the exemplary embodiment, the registration images 16 and the collation image 23 are collated with imaging of one place on the side surface of the glass lens. In contrast, in the second modification example, in a case where the registration image 16 and the collation image 23 are collated and do not coincide with each other with first imaging of one place on the side surface of the glass lens, second imaging is performed at a different angle in the circumferential direction of the side surface of the glass lens, and the registration image 16 and the collation image 23 are collated.

In the second modification example, although the glass lens is rotated by (1/2)θ, a rotation angle is arbitrary, and the glass lens may be rotated by θ. While a flaw or a stain may be present on the side surface of the glass lens, and the collation accuracy may be degraded due to the flaw or the stain, even in this case, the glass lens may be rotated by a given angle to acquire the collation image 23. Specifically, in a case where the degrees of similarity to all registration images 16 do not exceed the threshold value in the first collation, the glass lens is rotated by θ to perform second collation. Then, in a case where the degrees of similarity to all registration images 16 do not exceed the threshold value even in the second collation, the glass lens is rotated by θ again to perform third collation, and the like.

Of course, for example, an upper limit number of times of collation is set, and in a case where the degrees of similarity to all registration images 16 do not exceed the threshold value even though the upper limit number of times is reached, the determination processing ends, and finally, determination is appropriately made as non-coincidence.

Although the modification examples have been described above, the first modification example and the second modification example may be combined with each other. For example, like a case where the second modification example is executed after the first modification example is executed, any one of the first modification example and the second modification example is switched and executed depending on user's selection.

The exemplary embodiment and the first and second modification examples may be combined depending on the nature of the target 10. For example, the exemplary embodiment is executed to perform determination regarding a certain target 10, and any one of the first modification example and the second modification example is executed to perform collation a plurality of times from a viewpoint of improving the collation accuracy regarding another target 10.

In the exemplary embodiment and the modification examples, although a case where the collation image and the registration image group are collated has been described, a registration image having a length over the whole circumference of the side surface of the glass lens may be set as a registration image, and a plurality of collation images obtained by imaging a plurality of places on the side surface of the glass lens at a given angle of view and the registration image may be collated. Even with this, in a case of imaging the side surface having the elliptic cylindrical shape with no reference sign or reference mark for specifying the position of the registration image and collating the captured image with the registration images, collation with the registration images can be performed to perform unique identification without imaging the side surface having the elliptic cylindrical shape for one circumference.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art, as long as these are encompassed by the wording of the claims. The embodiments were chosen and described in order to best explain the principles of the invention and its practical applications, thereby enabling others skilled in the art to understand the invention for various embodiments and with the various modifications as are suited to the particular use contemplated, as long as these fall within the scope of the claims. It is intended that the scope of the invention be defined by the following claims.

Brief Description of the Reference Symbols

10:    target (columnar glass lens)
16:    registration image
20:    registration image capturing machine

22:  collation image capturing machine
23:  collation image
24:  collation device
26:  production management system

## Claims

1.  A collation device (24) comprising:

    a memory (24b, 24c) that stores, as a registration image group, a random pattern depending on microscopic irregularity on a side surface of a target having an elliptic cylindrical shape including a columnar shape; and a processor (24a),wherein a whole circumference of the side surface includes a plurality of predetermined intervals, the plurality of predetermined intervals respectively correspond to a plurality of positions, wherein the registration image group is composed of a plurality of registration images respectively acquired at the plurality of positions over a whole circumference of the side surface, and the processor (24a) executes a program to collate a collation image obtained by imaging the side surface at an angle of view with at least one registration image among the plurality of registration images composing the registration image group, output coincidence as a collation result and end the processing directly in a case where the collation image is similar to any one of the plurality of registration images composing the registration image group by a threshold value or greater, and output non-coincidence as the collation result and obtain another collation image by imaging the side surface at another angle of view in a case where the collation image is not similar to any of the plurality of registration images composing the registration image group.

2.  The collation device (24) according to claim 1, wherein the collation image is a single image.

3.  The collation device (24) according to claim 1, wherein each of the predetermined intervals is a regular interval.

4.  The collation device (24) according to claim 1, wherein the processor (24a) collates the collation image and the registration image group in order, when the collation image is similar to any one of the plurality of registration images composing the registration image group by the threshold value or greater, ends collation processing with a group of the remaining registration images not yet collated, and outputs coincidence as the collation result.

5.  The collation device (24) according to any one of claims 1 to 3, wherein the processor (24a) collates the collation image and the registration image group, outputs coincidence as the collation result in a case where the collation image is similar to any one of the plurality of registration images composing the registration image group by a threshold value or greater, and re-collates a second collation image obtained by imaging the side surface at a different focal position and the registration images in a case where the collation image is not similar to all of the plurality of registration images composing the registration image group.

6.  The collation device (24) according to any one of claims 1 to 3, wherein the collation image is obtained by imaging the side surface at an imaging distance shorter than a focal length of the registration image group at which the side surface is imaged.

7.  The collation device (24) according to any one of claims 1 to 3, wherein the processor (24a) collates the collation image and the registration image group, outputs coincidence as the collation result in a case where the collation image is similar to any one of the plurality of registration images composing the registration image group by a threshold value or greater, and re-collates a second collation image obtained by imaging the side surface at a different angle in a circumferential direction and the registration images in a case where the collation image is not similar to all of the plurality of registration images composing the registration image group.

8.  The collation device (24) according to any one of claims 1 to 7, wherein the target having the elliptic cylindrical shape including the columnar shape is a glass lens with the side surface having a ground glass shape.

**Patentansprüche**

1. Vergleichsvorrichtung (24), umfassend:

einen Speicher (24b, 24c), der als eine Registrierbildgruppe ein Zufallsmuster speichert, in Abhängigkeit von einer mikroskopischen Unregelmäßigkeit auf einer Seitenfläche eines Ziels mit einer elliptischen zylindrischen Form einschließlich einer Säulenform; und
einen Prozessor (24a),wobei ein gesamter Umfang der Seitenfläche eine Vielzahl von vorbestimmten Intervallen umfasst, wobei die Vielzahl von vorbestimmten Intervallen jeweils einer Vielzahl von Positionen entspricht, wobei die Registrierbildgruppe aus einer Vielzahl von Registrierbildern zusammengesetzt ist, die jeweils an der Vielzahl von Positionen über einen gesamten Umfang der Seitenfläche erfasst werden, und
der Prozessor (24a) ein Programm ausführt, um ein Vergleichsbild, das durch Abbilden der Seitenfläche unter einem Blickwinkel erhalten wird, mit mindestens einem Registrierbild aus der Vielzahl von Registrierbildern, die die Registrierbildgruppe bilden, zu vergleichen, Koinzidenz als ein Vergleichsergebnis auszugeben und die Verarbeitung direkt zu beenden, in einem Fall, in dem das Vergleichsbild irgendeinem aus der Vielzahl von Registrierbildern, die die Registrierbildgruppe zusammensetzen, um einen Schwellenwert oder mehr ähnlich ist, und Nicht-Koinzidenz als Vergleichsergebnis auszugeben und ein anderes Vergleichsbild durch Abbilden der Seitenfläche unter einem anderen Blickwinkel zu erhalten, in einem Fall, in dem das Vergleichsbild nicht irgendeinem aus der Vielzahl von Registrierbildern, die die Registrierbildgruppe zusammensetzen, ähnlich ist.

2. Vergleichsvorrichtung (24) gemäß Anspruch 1,
wobei das Vergleichsbild ein einzelnes Bild ist.

3. Vergleichsvorrichtung (24) gemäß Anspruch 1,
wobei jedes der vorbestimmten Intervalle ein regelmäßiges Intervall ist.

4. Vergleichsvorrichtung (24) gemäß Anspruch 1,
wobei der Prozessor (24a) das Vergleichsbild und die Registrierbildgruppe in Reihenfolge vergleicht, wenn das Vergleichsbild irgendeinem der Vielzahl von Registrierbildern, die die Registrierbildgruppe zusammensetzen, um den Schwellenwert oder mehr ähnlich ist, die Vergleichsverarbeitung mit einer Gruppe der verbleibenden, noch nicht verglichenen Registrierbilder beendet und die Koinzidenz als Vergleichsergebnis ausgibt.

5. Vergleichsvorrichtung (24) gemäß irgendeinem der Ansprüche 1 bis 3,
wobei der Prozessor (24a) das Vergleichsbild und die Registrierbildgruppe vergleicht, die Koinzidenz als Vergleichsergebnis ausgibt, in einem Fall, in dem das Vergleichsbild irgendeinem der mehreren Registrierbilder, die die Registrierbildgruppe zusammensetzen, um einen Schwellenwert oder mehr ähnlich ist, und ein zweites Vergleichsbild, das durch Abbilden der Seitenfläche bei einer anderen Brennpunktposition erhalten wird, und die Registrierbilder in einem Fall, in dem das Vergleichsbild nicht allen der Vielzahl von Registrierbildern, die die Registrierbildgruppe zusammensetzen, ähnlich ist, erneut vergleicht.

6. Vergleichsvorrichtung (24) gemäß irgendeinem der Ansprüche 1 bis 3,
wobei das Vergleichsbild durch Abbilden der Seitenfläche in einem Abbildungsabstand erhalten wird, der kürzer ist als eine Brennweite der Registrierbildgruppe, in der die Seitenfläche abgebildet wird.

7. Vergleichsvorrichtung (24) gemäß irgendeinem der Ansprüche 1 bis 3,
wobei der Prozessor (24a) das Vergleichsbild und die Registrierbildgruppe vergleicht, Koinzidenz als das Vergleichsergebnis in einem Fall ausgibt, in dem das Vergleichsbild irgendeinem der Vielzahl von Registrierbildern, die die Registrierbildgruppe bilden, um einen Schwellenwert oder mehr ähnlich ist, und ein zweites Vergleichsbild, das durch Abbilden der Seitenfläche unter einem anderen Winkel in einer Umfangsrichtung erhalten wird, und die Registrierbilder in einem Fall erneut vergleicht, in dem das Vergleichsbild nicht allen der Vielzahl von Registrierbildern, die die Registrierbildgruppe bilden, ähnlich ist.

8. Vergleichsvorrichtung (24) gemäß irgendeinem der Ansprüche 1 bis 7,
wobei das Ziel mit der elliptischen zylindrischen Form einschließlich der säulenförmigen Form eine Glaslinse ist, deren Seitenfläche eine geschliffene Glasform aufweist.

**Revendications**

1. Un dispositif de collationnement (24) comprenant :

    une mémoire (24b, 24c) qui stocke, en tant que groupe d'images d'enregistrement, un motif aléatoire dépendant d'une irrégularité microscopique sur une surface latérale d'une cible ayant une forme cylindrique elliptique comprenant une forme en colonne ; et
    un processeur (24a), une circonférence entière de la surface latérale comprenant une pluralité d'intervalles prédéterminés, la pluralité d'intervalles prédéterminés correspondant respectivement à une pluralité de positions,
    le groupe d'images d'enregistrement étant composé d'une pluralité d'images d'enregistrement respectivement acquises au niveau de la pluralité de positions sur la circonférence entière de la surface latérale, et
    le processeur (24a) exécute un programme pour collationner une image de collationnement obtenue par imagerie de la surface latérale sous un angle de vue avec au moins une image d'enregistrement parmi la pluralité d'images d'enregistrement composant le groupe d'images d'enregistrement, délivre une coïncidence en tant que résultat de collationnement et termine le traitement directement dans le cas où l'image de collationnement est similaire à l'une quelconque des images de la pluralité d'images de collationnement composant le groupe d'images de recalage par une valeur seuil ou supérieure à ce seuil, et délivre une non-coïncidence en tant que résultat de collationnement et obtient une autre image de collationnement par capture d'image de la surface latérale sous un autre angle de vue dans le cas où l'image de collationnement n'est similaire à aucune image de la pluralité d'images d'enregistrement composant le groupe d'images d'enregistrement.

2. Le dispositif de collationnement (24) selon la revendication 1,
    dans lequel l'image de collationnement est une image unique.

3. Le dispositif de collationnement (24) selon la revendication 1,
    dans lequel chacun des intervalles prédéterminés est un intervalle régulier.

4. Le dispositif de collationnement (24) selon la revendication 1,
    dans lequel le processeur (24a) collationne l'image de collationnement et le groupe d'images d'enregistrement dans l'ordre, lorsque l'image de collationnement est similaire à l'une quelconque des images de la pluralité d'images d'enregistrement composant le groupe d'images d'enregistrement par la valeur seuil ou supérieure à ce seuil, termine le traitement de collationnement avec un groupe des images d'enregistrement restantes non encore collationnées, et génère une coïncidence en tant que résultat de collationnement.

5. Le dispositif de collationnement (24) selon l'une quelconque des revendications 1 à 3,
    dans lequel le processeur (24a) collationne l'image de collationnement et le groupe d'images d'enregistrement, délivre une coïncidence en tant que résultat de collationnement dans le cas où l'image de collationnement est similaire à l'une quelconque des images de la pluralité d'images d'enregistrement composant le groupe d'images d'enregistrement par une valeur seuil ou supérieure à ce seuil, et re-collationne une deuxième image de collationnement obtenue par capture d'image de la surface latérale à une position focale différente et les images d'enregistrement dans le cas où l'image de collationnement n'est pas similaire à la totalité de la pluralité d'images d'enregistrement composant le groupe d'images d'enregistrement.

6. Le dispositif de collationnement (24) selon l'une quelconque des revendications 1 à 3,
    dans lequel l'image de collationnement est obtenue en capturant une image de la surface latérale à une distance de capture d'image plus courte qu'une distance focale du groupe d'images d'enregistrement à laquelle la surface latérale fait l'objet de la capture d'image.

7. Le dispositif de collationnement (24) selon l'une quelconque des revendications 1 à 3,
    dans lequel le processeur (24a) collationne l'image de collationnement et le groupe d'images d'enregistrement, délivre une coïncidence en tant que résultat de collationnement dans le cas où l'image de collationnement est similaire à l'une quelconque des images de la pluralité d'images d'enregistrement composant le groupe d'images d'enregistrement par une valeur seuil ou supérieure à ce seuil, et re-collationne une deuxième image de collationnement obtenue par imagerie de la surface latérale sous un angle différent dans une direction circonférentielle et les images d'enregistrement dans le cas où l'image de collationnement n'est pas similaire à la totalité de la pluralité d'images d'enregistrement composant le groupe d"images d'enregistrement.

8. Le dispositif de collationnement (24) selon l'une quelconque des revendications 1 à 7, dans lequel la cible ayant la forme cylindrique elliptique incluant la forme en colonne est une lentille en verre dont la surface latérale a une forme de verre dépoli.

# FIG. 1

## FIG. 2A

## FIG. 2B

## FIG. 2C

## FIG. 3

# FIG. 4

## RELATED ART

# FIG. 5

# FIG. 6

# FIG. 7

# FIG. 8

START

↓

ACQUIRE REGISTRATION IMAGE — S101

↓

ACQUIRE COLLATION IMAGE — S102

↓

COLLATE IMAGES — S103

↓

OUTPUT COLLATION RESULT — S104

↓

END

# FIG. 9

```
┌─────────────────────────────┐
│    REGISTRATION             │
│    IMAGE ACQUISITION        │
└─────────────────────────────┘
              │
              ▼
┌─────────────────────────────────────────────┐
│   PLACE TARGET ON ROTATION STAGE             │────S1011
└─────────────────────────────────────────────┘
              │
              ▼
┌─────────────────────────────────────────────┐
│   IMAGE WHILE ROTATING TARGET BY (LENGTH OF  │────S1012
│   COLLATION IMAGE – LENGTH OF REGISTRATION   │
│   IMAGE) AND CUT REGISTRATION IMAGE          │
└─────────────────────────────────────────────┘
              │
              ▼
┌─────────────────────────────────────────────┐
│   REPEAT IMAGING AND CUTTING UNTIL ROTATION  │────S1013
│   FOR ONE CIRCUMFERENCE AND ACQUIRE A        │
│   PLURALITY n OF REGISTRATION IMAGES         │
└─────────────────────────────────────────────┘
              │
              ▼
       ┌─────────────┐
       │     END     │
       └─────────────┘
```

# FIG. 10

```
┌─────────────────────────────┐
│   COLLATION IMAGE           │
│   ACQUISITION               │
└─────────────────────────────┘
              │
              ▼
┌─────────────────────────────────────────────┐
│   PLACE TARGET ON ROTATION STAGE             │────S1021
└─────────────────────────────────────────────┘
              │
              ▼
┌─────────────────────────────────────────────┐
│   IMAGE ONE PLACE OF                         │────S1022
│   TARGET AND CUT COLLATION IMAGE             │
└─────────────────────────────────────────────┘
              │
              ▼
       ┌─────────────┐
       │     END     │
       └─────────────┘
```

## FIG. 11A

```
        ( IMAGE COLLATION )
                 │
                 ▼
        ┌─────────────────┐      S201
        │      j = 1      │
        └─────────────────┘
                 │          ◄──────( B )
                 ▼
     ┌──────────────────────────┐   S202
     │ REFER TO REGISTRATION     │
     │ IMAGE GROUP OF j-TH LENS  │
     │ FROM DB                   │
     └──────────────────────────┘
                 │
                 ▼
        ┌─────────────────┐      S203
        │      i = 1      │
        └─────────────────┘
                 │          ◄──────( A )
                 ▼
     ┌──────────────────────────┐   S204
     │   PERFORM COLLATION       │
     │   CALCULATION OF          │
     │   i-TH REGISTRATION IMAGE │
     │   AND COLLATION IMAGE,    │
     │   AND CALCULATE DEGREE OF │
     │   SIMILARITY              │
     └──────────────────────────┘
                 │
                 ▼                      S205
         ◇ DEGREE OF                ◇
    Y ◄──┤ SIMILARITY > THRESHOLD │
         │ VALUE?                  │
                 │ N
                 ▼                      S206
                ◇ i = n? ◇──────────── Y
                 │ N
 S207            ▼           S208              S209
┌────────────┐ ┌─────────┐ ┌──────────────┐
│COINCIDENCE │ │ i = i+1 │ │NON-COINCIDENCE│
│DETERMINATION│ │         │ │DETERMINATION │
└────────────┘ └─────────┘ └──────────────┘
       │            │              │
       │            ▼              │
       │          ( A )            │
       │                           │
       └───────────► ( C ) ◄───────┘
```

# FIG. 11B

C

S210 — COINCIDENCE DETERMINATION?

N

S211 — j = m?

N

S212 — j = j + 1

B

Y

DETERMINE THAT THERE IS NO COINCIDING LENS — S213

Y

END

# FIG. 12

# FIG. 13

COLLATION ACCURACY

DEGRADE | DEGRADE

$-\theta$        0        $+\theta$

ANGLE

# FIG. 14

(a)

NEAREST
DISTANCE

23

22

16

(b)

NEAREST
DISTANCE

Δ

16

23

# FIG. 15

# FIG. 16

```
        ┌────────────────────────┐
        │    IMAGE COLLATION     │
        └───────────┬────────────┘
                    │
        ┌───────────▼────────────┐
        │         i = 1          │──── S1031
        └───────────┬────────────┘
                    │          ┌───┐
                    │◄─────────│ A │
                    │          └───┘
        ┌───────────▼────────────┐
        │    PERFORM COLLATION    │
        │     CALCULATION OF      │
        │  i-TH REGISTRATION IMAGE│──── S1032
        │   AND COLLATION IMAGE,  │
        │  AND CALCULATE DEGREE   │
        │     OF SIMILARITY       │
        └───────────┬────────────┘
                    │              S1033
              ◇─────▼─────◇
          Y  ╱  DEGREE OF   ╲
        ◄────  SIMILARITY > THRESHOLD
              ╲    VALUE?   ╱
               ◇─────┬─────◇
                   N │          S1034
              ◇──────▼──────◇        Y
             ╱    i = n?      ╲──────────►
              ◇──────┬──────◇
                   N │    S1036              S1038
  S1035             │
┌──────────────┐ ┌──▼──────┐    ┌─────────────┐
│ COINCIDENCE  │ │ i = i+1 │    │ SHIFT FOCAL │
│ DETERMINATION│ │         │    │  POSITION   │
└──────┬───────┘ └──┬──────┘    └──────┬──────┘
       │            │◄─────────────────┘
       │          ┌─▼─┐
       │          │ A │
       │          └───┘
       │
  ┌────▼─────┐
  │   END    │
  └──────────┘
```

# FIG. 17

(a)

16d  16c  10

16e

23

16b

θ

16a

16f

16g

16h

1/2 θ ROTATION

22

(b)

16c

16d

16b

10

16e

16a

22

23

16f

16h

16g

# FIG. 18

(a)

16e                    23              16f

(b)

16d        1/2 θ
           ROTATION        16e        23              16f

# FIG. 19

```
           ( IMAGE COLLATION )
                   |
                   v
         +-------------------+
         |      i = 1        |——— S1031
         +-------------------+
                   |
                   v  <——————————————————————( A )
         +-------------------+
         | PERFORM COLLATION |
         |   CALCULATION OF  |
         | i-TH REGISTRATION IMAGE |
         |  AND COLLATION IMAGE, |——— S1032
         | AND CALCULATE DEGREE |
         |    OF SIMILARITY   |
         +-------------------+
                   |
                   v
                        S1033
            /‾‾‾‾‾‾‾‾‾‾‾‾‾‾‾‾\
       Y   /   DEGREE OF      \
    <——————<  SIMILARITY > THRESHOLD >
           \     VALUE?        /
            _____/
                   | N
                   v         S1034
            /‾‾‾‾‾‾‾‾‾‾‾‾\   Y        S1039
           <   i = n?    >—————————> +------------------+
            _____/            | ROTATE TARGET AT |
                   | N               | 1/2 θ TO REACQUIRE |
                   v                 | COLLATION IMAGE  |
                                     +------------------+
  S1035        S1036
    |            |
    v            v
+------------+ +-----------+
|COINCIDENCE | |  i = i + 1 |
|DETERMINATION| +-----------+
+------------+       |
                     v
                   ( A )
                     |
                     v
                 ( END )
```

**REFERENCES CITED IN THE DESCRIPTION**

**Patent documents cited in the description**

- JP 2018026147 A
- JP 2017058306 A
- JP 2017183390 A
- EP 2738516 A2